Europäisches Patentamt

European Patent Office

Office européen des brevets

(19)

(11) Veröffentlichungsnummer: **0 430 027 A2**

(12) **EUROPÄISCHE PATENTANMELDUNG**

(21) Anmeldenummer: 90122150.7

(22) Anmeldetag: **20.11.90**

(51) Int. Cl.⁵: **H04N 7/133**

(30) Priorität: **27.11.89 DE 3939136**

(43) Veröffentlichungstag der Anmeldung:
**05.06.91 Patentblatt 91/23**

(84) Benannte Vertragsstaaten:
**AT BE CH DE DK ES FR GB GR IT LI LU NL SE
Patentblatt**

(71) Anmelder: **Licentia Patent-Verwaltungs-GmbH
Theodor-Stern-Kai 1
W-6000 Frankfurt/Main 70(DE)**

(72) Erfinder: **Eisenhardt, Volker, Dipl.-Ing.
Allewinder Weg 27
W-7900 Ulm(DE)**
Erfinder: **May, Franz, Dr. Ing.
Brucknerweg 17
W-7900 Ulm(DE)**
Erfinder: **Kummerfeldt, Georg, Dipl.-Ing.
Bogenholzstrasse 12
W-7910 Neu-Ulm(DE)**
Erfinder: **Wolf, Winfried, Dipl.-Ing.
Herrenkellergasse 5
W-7900 Ulm(DE)**

(74) Vertreter: **Amersbach, Werner, Dipl.-Ing. et al
Licentia Patent-Verwaltungs-GmbH
Theodor-Stern-Kai 1
W-6000 Frankfurt 70(DE)**

(54) Verfahren zur Decodierung von codierten Bilddaten.

(57) Für ein Verfahren zur Decodierung von codierten Bilddaten, vorzugsweise nach CCITT-Empfehlung H. 261, wird vorgeschlagen, daß fortlaufend der Datenstrom auf Übertra gungsfehler durch Ausnutzung der Restredundanz des Daten stromes überwacht wird und die nach Erkennen eines Übertragungsfehlers bis zum Auftreten eines Startcodeworts für ein Bild oder Teilbild rekonstuierten Bildpunktwerte nicht in den Prädiktions-Bildspeicher eingetragen werden.

EP 0 430 027 A2

# VERFAHREN ZUR DECODIERUNG VON CODIERTEN BILDDATEN

Die Erfindung betrifft ein Verfahren zur Decodierung von codierten Bilddaten nach dem Oberbegriff des Pa tentanspruchs 1.

Die digitale Übertragung von Bewegtbildfolgen durch pi xelweise Codierung und Übertragung der Originalbilder er fordert Bitraten, die in Netzen mit einer Vielzahl von Teilnehmern, wie z.B. dem ISDN der Deutschen Bundespost, in wirtschaftlicher Weise nicht annähernd erreichbar sind. Es sind daher effektive Codierverfahren für Fernsehsignale zur Übertragung oder Speicherung von Bildfolgen erarbeitet worden, die die Bild-zu-Bild-Redundanz ausnutzen, um die zur Rekonstruktion von Bewegtbildern erforderliche Daten rate bzw. -menge zu reduzieren. Noch effektiver werden die Verfahren, wenn zusätzlich eine Bewegungskompensation ein gesetzt wird. Beispielsweise wurde auf der Sitzung der CCITT Study Group XV, Working Party XV/1, Specialists Group on Coding for Visual Telephony vom 7.-10. November 1989 in Tokio mit dem Document 584 ein Standard zur Bild übertragung mit der CCITT-Empfehlungsnummer CCITT rec. H. 261 vorgeschlagen (Beschluß durch die SGXV voraussichtlich März 1990).

Bei dem Codierverfahren nach der genannten CCITT-Empfeh lung oder ähnlichen Verfahren ist die in der Folge von Originalbildern enthaltene Redundanz erheblich verringert, indem im wesentlichen nur noch Veränderungen im Original bild übertragen werden. Für die Rekonstruktion der Bewegt bildfolge ist ein Prädiktions-Bildspeicher vorgesehen, dessen Inhalt ein vollständiges Bild umfaßt und der durch aus den übertragenen und empfängerseitig decodierten Daten rekonstruierten Bildpunktwerten aktualisiert wird.

Die Datenreduktion führt dazu, daß Übertragungsfehler im Decoder zu auffälligen Bildstörungen führen. Grund hierfür ist, daß ein Bitfehler im allgemeinen zu einer Kette von falsch decodierten Bildpunkten führt, und auf Grund der Bild-zu-Bild Prädiktion ein Fehler nicht nur kurzzeitig sichtbar ist, sondern längere Zeit.

Um das möglichst zu verhindern, arbeiten gängige Verfahren zur Datenreduktion bei Bildfolgen mit Fehlerschutz und Fehlerkorrektur einzelner Bitfehler oder kurzer Fehlerbün del. Um einen einmal aufgetretenen Fehler im Laufe der Zeit abzubauen, wird auch die Bild-zu-Bild Prädiktion in kleinen Bildbereichen periodisch unterbrochen und der Ori ginalinhalt in codierter Form übertragen.

Fehlerkorrektursysteme versagen i.a. bei langen Fehlerbün deln, insbesondere aber bei Paket- oder ATM-Netzen, wenn ein ganzes Paket oder eine Zelle bzw. mehrere verloren ge hen. Das periodische Übertragen von Originalinformation baut zwar Fehler allmählich ab, kann aber ihr störendes Sichtbarwerden nicht verhindern.

Aufgabe der vorliegenden Erfindung ist, Bildstörungen der vorstehend beschriebenen Art weitgehend zu vermeiden.

Die Erfindung ist im Patentanspruch 1 beschrieben. Die Un teransprüche enthalten vorteilhafte Ausführungen und Wei terbildungen der Erfindung.

Die Erfindung ist nachfolgend anhand der beispielhaft an genommenen genannten CCITT-Empfehlung H. 261 noch einge hend veranschaulicht.

Moderne Codierverfahren sind üblicherweise hierarchisch aufgebaut. Bei der CCITT-Empfehlung H. 261 wird das Bild z.B. in 3 bzw. 12 (je nach Auflösung) Teilbilder zerlegt, diese wieder in 33 Macroblöcke, diese wieder in 6 Blöcke zu 8*8 Bildpunkten. Es gibt ein Startcodewort für das Bild und für jedes der Teilbilder. Anschließend werden Bild- bzw. Teilbildattribute übertragen, dann die Macroblock-At tribute und schließlich die Daten des durch die Attribute adressierten Blockes. Die Übermittlung dieser Attribute erfolgt nicht redundanzfrei. Das äußert sich z.B. darin, daß es im Decodierbaum nicht zugelassene Bitkombinationen gibt. Ein im Datenstrom auftretender Bitfehler oder feh lende Bits (aufgrund eines Paket- oder Zellenverlustes) führen aber nicht zwangsweise zu einer unzulässigen Bit kombination, sondern können auch eine andere zulässige Bitkombination vortäuschen und insbesondere bei Verwendung von Optimalcodes mit unterschiedlichen Wortlängen zu gra vierenden Störungen bei der Decodierung der nachfolgenden Bits führen. Für die vorliegende Erfindung bedeutsam ist die Erkenntnis, daß trotz der Möglichkeiten, daß ein Feh ler eine falsche, aber zulässige Bitkombination erzeugt, bei der Decodierung der nachfolgenden Bits mit hoher Wahr scheinlichkeit eine aufgrund der Rest-Redundanz des Co dierverfahrens nicht zulässige Bitkombination auftritt, d.h. die zulässigen Pfade des Decodierbaums verlassen wer-den.

Erfindungsgemäß wird daher der Datenstrom unter Ausnutzung der Restredundanz auf das Auftreten von Übertragungsfeh lern überprüft, wobei vorzugsweise der Zustand einer nicht zulässigen Bitkombination als Merkmal eines Übertragungs fehlers gewertet wird.

Es kann auch die Meldung einer anderen fehlererkennenden Baugruppe des Empfängers z.B. des Vorwärtsfehler-Korrektor (BCH Decoder) des Decodierers ausgenutzt werden, um einen Übertragungsfehler festzustellen. Nach Erkennen eines Feh lers im Datenstrom werden die nachfolgenden Bits des Da tenstroms bzw. die daraus nach Decodierung rekonstruierten Bildpunktwerte nicht mehr zur Aktualisierung des Prädikti ons-Bildspeichers herangezogen. Für die betroffenen Bild be reiche bleibt daher der Inhalt des Speichers unverän dert. Der Datenstrom wird weiter über prüft auf das Auftre ten eines Codewortes aus ei ner geringen Anzahl von mit fe ster Zuordnung vorgegebenen Codeworten. Bei der H. 261 sind dies die Startcodeworte für ein Bild oder für eines der numerierten Teilbilder (auch Bild- bzw. Teilbild-Syn chronimpuls). Nach korrektem Empfang und Decodierung eines solchen Startcodeworts liegt ein definierter Zustand vor und die Synchronisation für die Decodierung ist wieder hergestellt, so daß die nachfolgenden Bits wieder korrekt decodiert und die daraus rekonstruierten Bildpunktwerte wieder in den Prädiktions-Bildspeicher eingetragen werden können. Übertragungsfehler führen daher nicht zu einer auffälligen Bildstörung, sondern lediglich zu einer verzö gerten Aktualisierung eines i.a. relativ kleinen Bildaus schnitts.

Darüber hinaus können nach dem bisher ge schilderten Maß nahmen verbleibende Störungen, die auf die Decodierung des Datenstroms zwischen Auftreten und Erkennen eines Übertra gungsfehler zurückgehen, weiter dadurch verringert werden, daß die rekonstruierten Bildpunktwerte nicht sofort in den Prädiktions-Bildspeicher eingetragen wer den, sondern mit vorgebbarer Verzögerung, und daß nach Erkennen eines Über tragungsfehlers rückwirkend bereits decodierte Bilddaten oder re konstruierte Bildpunktwerte nicht zur Aktualisie rung des Prädiktions-Bildspeichers herangezogen werden in einem vorgebbaren Umfang, bei Codie rung nach H. 261 vor zugsweise alle bereits deco dierten Werte des aktuellen Macroblocks, wahlwei se auch zusätzlich die Werte des letz ten voraus gehenden Blocks oder Macroblocks.

Neben dem Auftreten unzulässiger Bitkombina tionen bei der Decodierung können Fehlermeldun gen bevorzugterweise noch abgeleitet werden nach den folgenden Kriterien:

a) wenn eine decodierte und dequantisierte Spektralkompo nente außerhalb eines zulässigen Amplitudenbereiches für Spek tralkomponenten liegt und/oder

b) wenn eine unzulässig hohe Macroblock nummer auftritt und/oder

c) wenn Verschiebungsvektoren zu Bild punkten außerhalb des codierten Bildbe reichs weisen und/oder

d) wenn in einem Block mehr als eine vorge gebene Maximal zahl von Spektralkom ponenten decodiert werden.

Diese Kriterien stellen Spezialfälle für unzuläs sige Si tuationen dar, wie sie beispielsweise auch durch die ge nannte Empfehlung H. 261 definiert und begrenzt sind auf beispielsweise eine höchste Macroblocknummer 33 oder maxi mal 64 Spek tralkomponenten in einem Block.

Die Erfindung ist nicht auf die beschriebenen Beispiele beschränkt. Insbesondere können ande re, der H. 261 ähnli che Codierverfahren vorgese hen sein. Die Erfindung kann auch in vorteilhafter Weise in Systemen zur Bildspeiche rung, die zur Einsparung von Speicherplatz mit Datenreduk tionsverfahren arbeiten, angewandt werden.

**Ansprüche**

1. Verfahren zur Decodierung von codierten Bild daten aus einem Datenstrom, insbesondere zur Übertragung von Bewegt bildfolgen, und zur Aktualisierung des Inhalts eines Prä diktions-Bildspeichers nach Maßgabe der aus der Decodie rung gewonnenen Bildpunktwerte bei welchem die Bilddaten nach einem Codier-Verfahren mit Rest-Redundanz codiert sind und der Datenstrom eindeutig zuordbare Start codeworte für Bild und/oder Teilbilder enthält, dadurch ge kennzeichnet. daß der Datenstrom unter Ausnutzung der Rest-Redundanz fortlau fend auf das Auftreten von Übertra gungsfeh lern überprüft wird und daß nach Erkennen eines Übertragungsfehlers die bis zum Auftre ten eines neuen Startcodeworts für das Bild oder ein Teilbild rekonstru ierten Bildpunkt werte nicht zur Aktualisierung des Prädik tions-Bildspeichers genutzt werden.

2. Verfahren nach Anspruch 1, dadurch gekenn zeichnet, daß die Rest-Redundanz des Codier-Verfahrens dadurch gegeben ist, daß nicht alle Bitfolgen zulässig sind und daß zur Erkennung von Übertragungsfehlern beim Decodiervor gang fortlaufend geprüft wird, ob zulässige Pfade des Decodier baums verlassen werden.

3. Verfahren nach Anspruch 1 oder 2, dadurch gekennzeich net, daß durch Fehlermeldungen von anderen Baugruppen des Empfängers gleichfalls die bis zum Auftreten eines neuen Startcodeworts für das Bild oder ein Teilbild rekonstru ierten Bildpunktwerte nicht zur Ak tualisierung des Prädik tions-Bildspeicherin halts genutzt werden.

4. Verfahren nach einem der Ansprüche 1 bis 3, dadurch gekennzeichnet, daß nach dem Erken nen eines Fehlers auch zeitlich vor der Fehler erkennung rekonstruierte Bildpunkt werte in vorgebbarem Umfang von der Aktualisierung des Prädiktions-Bildspeicherinhalts ausge schlossen werden.

5. Verfahren nach einem der Ansprüche 1 bis 4, dadurch gekennzeichnet, daß die Bilddaten nach CCITT rec. H. 261 codiert werden.

6. Verfahren nach Anspruch 4 und 5, dadurch gekennzeich net, daß nach dem Erkennen eines Fehlers zusätzlich alle bereits rekonstruierten Bildpunktwerte des aktuellen Macroblocks, wahlweise auch zusätzlich die Bildpunktwerte des letzten vorausgehenden Blocks oder Macroblocks nicht zur Aktualisierung des Prädiktions-Bildspeichers genutzt werden.

7. Verfahren nach einem der vorhergehenden Ansprüche, da durch gekennzeichnet, daß auf das Auftreten eines Übertra gungsfehlers erkannt wird, wenn eine decodierte und de quantisierte Spektralkomponente außerhalb eines zulässigen Amplitudenbereichs für Spektralkomponenten liegt.

8. Verfahren nach einem der vorhergehenden Ansprüche, da durch gekennzeichnet, daß auf das Auftreten eines Übertra gungsfehlers erkannt wird, wenn eine unzulässig hohe Macroblocknummer auftritt.

9. Verfahren nach einem der vorhergehenden Ansprüche, da durch gekennzeichnet, daß auf das Auftreten eines Übertra gungsfehlers erkannt wird, wenn Verschiebungsvektoren zu Bildpunkten außerhalb des codierten Bildbereichs weisen.

10. Verfahren nach einem der vorhergehenden Ansprüche, dadurch gekennzeichnet, daß auf das Auftreten eines Über tragungsfehlers erkannt wird, wenn in einem Block mehr als eine vorgegebene maximale Anzahl von Spektralkomponenten decodiert werden.